# EUROPÄISCHE PATENTSCHRIFT

(11) **EP 2 887 428 B1**
(45) Veröffentlichungstag und Bekanntmachung des Hinweises auf die Patenterteilung: **12.10.2016**
(21) Anmeldenummer: 13199013.7
(22) Anmeldetag: 20.12.2013
(51) Int. Cl.: H01M 4/75, H01M 4/68, H01M 4/14, H01M 2/26, H01M 10/12, H01M 4/76, H01M 2/28

(54) **Batterie, insbesondere Traktionsbatterie**
Battery, in particular traction battery
Batterie, en particulier batterie de traction

(43) Veröffentlichungstag der Anmeldung: 24.06.2015
(73) Patentinhaber: HOPPECKE Batterien GmbH & Co. KG, 59929 Brilon (DE)
(72) Erfinder: Kesper, Heinrich, Dipl.-Ing., 34508 Willingen (DE)
(74) Vertreter: Stenger Watzke Ring

(56) Entgegenhaltungen:
- GB-A- 2 069 225
- JP-A- S61 220 276
- US-A- 4 508 801

## Beschreibung

Die Erfindung betrifft eine Batterie, insbesondere eine Traktionsbatterie, die bevorzugterweise als Blei-Säure-Batterie ausgebildet ist, mit einem oberseitig Anschlusspole bereitstellenden Batteriegehäuse, in dem mit den Anschlusspolen verbundene negative und positive Elektroden einander abwechselnd angeordnet sind, wobei die positiven Elektroden als Rohrplatten ausgebildet sind und jeweils einen Stromabnehmersteg sowie eine Mehrzahl von sich von dem Stromabnehmersteg parallel zueinander erstreckenden Seelen aufweisen und wobei die negativen Elektroden als Gitterplatten ausgebildet sind und jeweils einen in eine Stromabnehmerfahne übergehenden Stromabnehmersteg sowie ein daran angeordnetes Stabgitter aufweisen, das mit aktiver Masse befüllte Gitterfelder bereitstellt.

Eine gattungsgemäße Batterie ist aus der US 4,508,801 A bekannt.Als weiterer Stand der Technik sei exemplarisch auf die DE 10 2008 034 587 A1, die GB 387,906, die US 5,680,242 und die US 2,570,677 verwiesen.

Eine Traktionsbatterie verfügt typischerweise über ein Batteriegehäuse. Dieses weist einen oberseitig offenen Bottich sowie einen den Bottich im bestimmungsgemäßen Verwendungsfall verschließenden Deckel auf. Oberseitig des Batteriegehäuses, zumeist am Gehäusedeckel sind die für eine elektrische Kontaktierung vorgesehenen Anschlusspole angeordnet.

Das Batteriegehäuse dient der Aufnahme von positiven und negativen Elektroden einerseits sowie von Schwefelsäure als Elektrolyt andererseits. Dabei sind die negativen und positiven Elektroden mit den Anschlusspolen elektrisch kontaktiert und einander abwechselnd angeordnet.

Gemäß einer bevorzugten Bauform sind die negativen Elektroden als sogenannte Gitterplatten ausgebildet. Sie weisen einen Stromabnehmersteg sowie ein dran angeordnetes Stabgitter auf, das mit aktiver Masse befüllte Gitterfelder bereitstellt.

Die positiven Elektroden sind indes bevorzugter Weise als Rohrplatten ausgebildet. Diese verfügen jeweils über einen Stromabnehmersteg sowie über eine Mehrzahl von sich in Höhenrichtung des Batteriegehäuses erstreckenden Seelen. Es ist ferner jeweils eine Rohrtasche vorgesehen, die eine der Anzahl der Seelen entsprechende Anzahl an Röhren aufweist. Im verwendungsfertigen Zustand ist innerhalb einer jeden Röhre eine Seele angeordnet, wobei der Hohlraum zwischen Seele und Röhre mit aktiver Masse gefüllt ist, üblicherweise einer Paste aus Bleioxid, Schwefelsäure und Wasser. Um zu verhindern, dass die aktive Masse aus der Rohrtasche herausläuft, sind die dem Stromabnehmersteg entgegengesetzten Öffnungen der Röhren mit einer Abschlussleiste verschlossen. Als Material für die Rohrtaschen kommt insbesondere ein textiles Gewebe oder Vlies in Frage.

Im Speziellen ausgebildete positive Elektroden sind aus der GB 2,069,225 A und der JP 61220276 A bekannt geworden. Dabei betrifft die positive Elektrode nach der JP 61220276 A eine Ausgestaltung, wonach die Seelen orthogonal zur Höhenrichtung des Batteriegehäuses verlaufend ausgerichtet sind. Die Seelen sind jeweils von einem Rohr einer Rohrtasche aufgenommen, das mit aktiver Masse befüllt ist.

Zur elektrischen Entkopplung der im Batteriegehäuse angeordneten negativen und positiven Elektroden kommen Separatoren zum Einsatz, wobei zwischen je einer negativen und einer positiven Elektrode ein Separator angeordnet ist. Gemäß einer möglichen Bauform kommen sogenannten Separatortaschen oder Separatorärmel zum Einsatz, die der jeweiligen Aufnahme einer negativen Elektrode dienen.

Batterien der vorbeschriebenen Art haben sich seit Jahrzehnten im Praxiseinsatz bewährt. Es besteht gleichwohl Verbesserungsbedarf.

Es sind aus dem Stand der Technik unterschiedliche Batteriebaugrößen bekannt, wobei mit der Baugröße die Kapazität einer Batterie steigt. Aufgrund einschlägiger Vorschriften und Normen sind die äußeren Abmessungen von Traktionsbatterien insbesondere in Breitenrichtung festgelegt. Als Freiheitsgrade für unterschiedliche Baugrößen stehen damit nur die Höhenrichtung und die Tiefenrichtung, nicht aber die Breitenrichtung einer Batterie zur Verfügung. Batterien mit vergleichsweise hoher Kapazität bauen deshalb in Höhenrichtung vergleichsweise hoch auf. Der notwendige Aufbau in Höhenrichtung ergibt sich mithin als Folge einer gewünschten Kapazität.

Mit zunehmendem Aufbau in Höhenrichtung werden auch die Seelen der als Rohrplatten ausgebildeten positiven Elektroden länger, was im bestimmungsgemäßen Verwendungsfall zu einem ebenfalls größer werdenden Stromweg führt. In nachteiliger Weise führt dies unvermeidbar zu einem höheren elektrischen Widerstand, was im Betriebsfall zu Spannungsverlusten führt. Es kommt hinzu, dass es in den einschlägigen Einsatzgebieten gattungsgemäßer Batterien immer mehr zu Hochstromanwendungen kommt, sei es im Entladefall durch den Betrieb von beispielsweise Drehstrommotoren oder im Beladefall durch den Einsatz von zum Beispiel modernen Lademanagementsystemen und/oder Energierückgewinnungseinrichtungen (Rekuperation). Die Aufnahme und/oder die Abgabe hoher Ströme führt mit zunehmendem Stromweg zu stärker ins Gewicht fallenden unerwünschten Nebeneffekten wie zum Beispiel der Wärmeentwicklung aufgrund des mit steigendem Stromweg anwachsenden Innenwiderstands. In nachteiliger Weise führt dies im Verwendungsfall zu einer verkürzten Lebensdauer sowie zu kürzeren Entladezyklen. Damit sind aus dem Stand der Technik vorbekannte Traktionsbatterien ab einer bestimmten Baugröße für Hochstromanwendungen nicht oder nur bedingt geeignet, was insbesondere für Batterien der Baugrößen gilt, die vom Markt wegen der gewünscht hohen Kapazität gefordert werden. Es stehen sich somit die einander widerstreitenden Anforderungen gegenüber, eine Batterie zu schaffen, die bei gleichzeitiger Langlebigkeit entweder eine hohe Kapazität bereitstellt oder für Hochstromanwendungen geeignet ist. Gattungsgemäße Batterien werden diesen Anforderungen nicht gerecht.

Es ist ausgehend vom Vorbeschriebenen die **Aufgabe** der Erfindung, eine Batterie, insbesondere eine Traktionsbatterie der eingangs genannten Art dahingehend weiterzuentwickeln, dass bei gleichzeitig hoher Kapazität die Eignung für Hochstromanwendungen gegeben ist.

Zur **Lösung** dieser Aufgabe wird mit der Erfindung eine gattungsgemäße Batterie nach Anspruch 1 vorgeschlagen, die sich dadurch auszeichnet, dass die Seelen der positiven Elektroden quer, vorzugsweise orthogonal zur Höhenrichtung des Batteriegehäuses verlaufend ausgerichtet sind und dass der Stromabnehmersteg der negativen Elektroden in Höhenrichtung des Batteriegehäuses verlaufend ausgerichtet ist.

In Abkehr vom bisherigen Konstruktionsaufbau sind die Seelen der erfindungsgemäßen Batterie nicht in Höhenrichtung des Batteriegehäuses verlaufend ausgerichtet, sondern quer hierzu, vorzugsweise orthogonal. Die nach dem Stand der Technik seit Jahrzehnten verwendete Bauform wird damit abgelöst. Im Ergebnis dieser im Vergleich zum Stand der Technik vorzugsweise um 90° verdrehten Ausrichtung der Seelen ergibt sich in vorteilhafter Weise bei gleichzeitigem Erhalt der gewünschten Lebensdauer die Eignung auch für Hochstromanwendungen. Einer Größenbeschränkung zwecks Bereitstellung entsprechender Kapazitäten ist die erfindungsgemäße Bauform dabei nicht unterworfen.

Aufgrund der Ausrichtung der Seelen quer zur Höhenrichtung des Batteriegehäuses ergibt sich eine von der Baugröße der Batterie in Höhenrichtung unabhängige Seelenlänge. Die Seelen der erfindungsgemäßen Batterie sind über alle Batteriebaugrößen hinweg gleich groß. Der von jeder Seele bereitgestellte Stromweg und der damit einhergehende Innenwiderstand ist also unabhängig von der Batteriebauhöhe immer gleich groß. Anders als aus dem Stand der Technik bekannt, findet zum Zwecke einer Kapazitätserhöhung keine Verlängerung der Seelen in Längsrichtung statt, sondern es wird stattdessen die Anzahl der Seelen erhöht. Die Seelenlänge bleibt unverändert, womit trotz gestiegener Kapazität der Innenwiderstand einer Seele baugrößenunabhängig ist, so dass auch von Batterien vergleichsweise großer Baugröße hohe Stromstärken gleichermaßen gut aufgenommen beziehungsweise abgegeben werden können. Damit eignet sich die erfindungsgemäße Batterie auch in einer für größere Kapazitäten vergleichsweise großen Bauform für Hochstromanwendungen.

Bei aus der aus dem Stand der Technik vorbekannten Konstruktion kommt ein quer zur Höhenstreckung der Batterie verlaufender Oberrahmen zum Einsatz, der anschlusspolseitig eine Stromabnehmerfahne und auf der der Stromabnehmerfahne gegenüberliegenden Seite die damit verbundenen Seelen trägt. Dabei nimmt die Seelenlänge mit zunehmender Batteriebaügröße zu. Nach der erfindungsgemäßen Ausgestaltung kommt kein solcher Oberrahmen, sondern ein Stromabnehmersteg zum Einsatz, der in Höhenrichtung des Batteriegehäuses ausgerichtet ist. Von diesem Stromabnehmersteg zweigen die einzelnen Seelen ab. Dabei verlaufen die Seelen nicht in Höhenrichtung des Batteriegehäuses, sondern quer hierzu, dass heißt in Breitenrichtung des Batteriegehäuses. Um zwecks Kapazitätserhöhung mehr aktive Masse aufnehmen zu können, ist die Baugröße der Batterie in Höhenrichtung entsprechend auszulegen, was bei der erfindungsgemäßen Ausgestaltung zu einem verlängerten Stromabnehmersteg einerseits und einer größeren Anzahl von daran angeordneten Seelen andererseits führt.

Um den vom Stromabnehmersteg bereitgestellten Innenwiderstand zu minimieren, wird mit der Erfindung vorgeschlagen, dass dieser in Richtung auf sein den Anschlusspolen gegenüberliegendes Ende verjüngt zulaufend ausgebildet ist. Die Querschnittfläche des Stromabnehmerstegs steigt damit in Höhenrichtung der Batterie an, das heißt ausgehend vom Anschlusspol entfernten Ende mit der Anzahl der daran angeordneten Seelen.

Der anschlusspolseitige Endabschnitt des Stromabnehmerstegs dient als Stromabnehmerfahne. Dies ist insbesondere aus produktionstechnischen Gründen von Vorteil, da es nicht mehr der Ausbildung einer zusätzlichen Stromabnehmerfahne bedarf.

Die Seelen sind bevorzugterweise im Querschnitt zumindest abschnittsweise sternförmig ausgebildet, um ein optimiertes Verhältnis zwischen Kontaktfläche zwischen aktiver Masse und Seelenoberfläche einerseits und den von einer Röhre der Rohrtasche bereitgestellten Volumenraum zur Aufnahme von aktiver Masse andererseits sicherzustellen.

Die mit Bezug auf das Batteriegehäuse nach der Erfindung vorgesehene Querausrichtung der Seelen erweist sich in vielerlei Hinsicht als vorteilhaft, wobei sich darüber hinaus auch noch synergetische Effekte wie folgt ergeben. Der durch die Erstreckung in Längsrichtung einer Seele begründete Innenwiderstand ist von der Bauhöhe der Batterie unabhängig. Sowohl beim Be- als auch Entladen treten damit auch bei Hochstromanwendungen weniger unerwünschte Nebeneffekte wie zum Beispiel Wärmeentwicklung auf. Damit hat die Baugröße im Unterschied zum Stand der Technik keinen negativen Einfluss auf die Hochstromfähigkeit, so dass auch Batterien mit vergleichsweise hoher Kapazität in gleichem Maße für Hochstromanwendungen geeignet sind.

Sowohl beim Be- als auch Entladen der Batterie findet eine vergleichmäßigte Nutzung der aktiven Masse statt. Die unterschiedliche Ausnutzung der aktiven Masse in Abhängigkeit der Entfernung zum Stromabnehmer verschlechtert sich bei der erfindungsgemäßen Konstruktion bei größeren Bauformen nicht, da die Längserstreckung der Seelen baugrößenunabhängig stets gleich groß ist.

Die erfindungsgemäße Konstruktion ermöglicht zudem eine vergleichmäßigte Säureverteilung im Elektrolyten. Während eines Be- und/oder Entladeprozesses kommt es aufgrund der sich ändernden Säurekonzentration zu einem Gradienten in der Säuredichteverteilung. Es entsteht eine nicht zu vermeidende Säuredichteschichtung, wobei sich die Säure der höchsten Konzentration, das heißt die Säure mit der höchsten Dichte unten im Akkumulatorgehäuse ansammelt. Um eine Homogenisierung zu erreichen, ist es aus dem Stand der Technik bekannt, eine Säuredurchmischung vorzusehen, was beispielsweise mittels aufsteigender Gasbläschen infolge einer Batterieüberladung stattfinden kann.

Das Problem der Säuredichteschichtung ist bei der erfindungsgemäßen Ausgestaltung minimiert, das heißt der Gradient der Säuredichteverteilung ist im Unterschied zum Stand der Technik kleiner. Dies wird durch den gleichmäßigeren Stromfluss aufgrund der baugrößenunabhängig immer gleichlangen Seelen erreicht.

Produktionstechnisch ist im Übrigen von Vorteil, dass die erfindungsgemäß ausgestaltete Platte in gleicher Weise und auf dem Grunde nach unveränderten Herstellmaschinen gemäß dem Stand der Technik hergestellt werden kann. Es kann damit produktionsbeziehungsweise herstelltechnisch auf bewährte Materialien und Verfahren zurückgegriffen werden. Die mit der neuartigen Batteriekonstruktion einhergehenden Vorteile ergeben sich mithin nicht zulasten der Herstellung.

Die erfindungsgemäße Ausgestaltung ist durch die im Unterschied zum Stand der Technik seitliche Anordnung des in Höhenrichtung ausgerichteten Stromabnehmerstegs in ihrem geometrischen Aufbau weniger kompliziert. Darüber hinaus sind im Unterschied zum Stand der Technik die Seelen in Richtung ihrer Längserstreckung insbesondere bei größeren Batteriebauformen vergleichsweise kurz ausgebildet. Dies gestattet eine Herstellung als Fallguss- beziehungsweise Gravitationsgussteil, da die Fließwege für das Gussmaterial entsprechend kurz ausfallen. Das Fallguss- beziehungsweise Gravitationsgussverfahren kann bei aus dem Stand der Technik bekannten positiven Elektroden aufgrund der dortigen Seelenlängen nicht angewandt werden. Dies stellt gegenüber der aus dem Stand der Technik bekannten Ausgestaltung als Druckgussteil eine Herstellungsvereinfachung dar.

Hinsichtlich der Befüllung der Rohrtäschen mit aktiver Masse ist mit der erfindungsgemäßen Ausgestaltung ebenfalls eine Verbesserung erreicht. So kann beim Einschießen von aktiver Masse eine vergleichmäßigtere Dichteverteilung der aktiven Masse innerhalb der Rohrtasche erreicht werden, weil die Rohrtaschen in Entsprechung der Seelenausgestaltung auch bei größeren Bauformen weniger lang ausgebildet sind. Sofern die aktive Masse über bewegbare Stößel injiziert wird, ergibt sich aufgrund der erfindungsgemäßen Konstruktion insoweit eine Verbesserung, als dass durch die verkürzten Rohrtaschen die Einführzeiten beziehungsweise die Ausfahrzeiten im Vergleich zum Stand der Technik reduziert sind. Unabhängig von dem Verfahren zum Einbringen der aktiven Masse in die Rohrtasche ergibt sich der Vorteil der verminderten Verformungsneigung der Seelen beim Einbringen der aktiven Masse. Mit zunehmender Seelenlänge nimmt die Verformungsneigung zu, weshalb sich die erfindungsgemäße Konstruktion aufgrund der baugrößenunabhängigen Ausgestaltung der Seelen auch insoweit als vorteilhaft erweist.

In Kombination mit der negativen Platte ergibt sich zudem eine immer gleiche Stromflusslänge, was durch die nach der Erfindung vorgesehene seitliche Stromabnahme bedingt ist. Während bei aus dem Stand der Technik bekannten Platten es einen Unterschied ausmacht, ob ein Elektron aus einem oberen Teilbereich der positiven Platte zu einem oberen Teilbereich der negativen Platte übergeht im Unterschied zu einem Elektron, das aus einem unteren Teilbereich der positiven Platte stammt und in einen unteren Teilbereich der negativen Platte zu überführen ist, gibt es diese Längenunterschiede im Stromflussweg bei einer seitlichen Stromabnahme gemäß der erfindungsgemäßen Ausgestaltung nicht. Hier sind die Stromflusslängen immer gleichlang, womit eine effektivere und vergleichmäßigte Nutzung gestattet ist.

Im Ergebnis erbringt die erfindungsgemäße Ausgestaltung eine gleichmäßigere Stromentladung und -beladung, eine homogenere Füllung mit aktiver Masse, die Möglichkeit des Gravitationsgusses, die Ausbildung immer gleicher Stromflusslängen und die Unabhängigkeit von der Kapazitätsgröße, das heißt der Größenausgestaltung der Batterie in Höhenrichtung. Zudem können bekannte Verfahren zur Herstellung, bekannte Materialien sowie ebenfalls bekannte Lademanagementsysteme verwendet werden. Bei gleichzeitig signifikanter Verbesserung mit Bezug auf Hochstromanwendungen wird damit Betriebssicherheit erreicht.

Mit der Erfindung wird ferner in Kombination mit einer positiven Elektrode vorgeschlagen, dass die negativen Elektroden als Gitterplatten ausgebildet sind und jeweils einen in eine Stromabnehmerfahne übergehenden Stromabnehmersteg sowie ein daran angeordnetes Stabgitter aufweisen, das mit aktiver Masse befüllte Gitterfelder bereitstellt, wobei der Stromabnehmersteg in Höhenrichtung des Batteriegehäuses ausgerichtet ist.

Die negative Elektrode ist in an sich bekannter Weise als Gitterplatte ausgebildet. Diese stellt eine Mehrzahl von Gitterfeldern bereit, die im endmontierten Zustand mit aktiver Masse befüllt sind. Anders als aus dem Stand der Technik bekannt ist der Stromabnehmersteg, mit dem das Stabgitter der Gitterplatte verbunden ist, nicht als Oberrahmen quer zur Höhenerstreckung der Batterie verlaufend ausgebildet, sondern verläuft in Höhenrichtung des Batteriegehäuses, ist also im Unterschied zum Stand der Technik um vorzugsweise 90° versetzt ausgerichtet. Es wird hierdurch eine zum Stabgitter seitliche Anordnung des Stromabnehmerstegs erreicht, wodurch sich in Kombination mit den positiven Elektroden der schon vorerläuterte Vorteil der stets gleich langen Stromflusswege ergibt. Darüber hinaus ergibt sich produktionstechnisch eine Vereinfachung, da der Stromabnehmersteg direkt in die Stromabnehmerfahne übergeht, es der besonderen Ausgestaltung einer Stromabnehmerfahne im Unterschied zum Stand der Technik also nicht bedarf.

Das Stabgitter verfügt gemäß einem weiteren Merkmal der Erfindung über Quer- und Längsstäbe, wobei die Querstäbe quer zur Höhenrichtung des Stromabnehmerstabs verlaufen und einen den Durchmesser der Längsstäbe übersteigenden Durchmesser haben.

Die Durchmesserausgestaltung der Querstäbe ist produktionstechnisch veranlasst. So ist hinsichtlich der Querstäbe ein solcher Durchmesser zu wählen, dass ein im Fallgussverfahren hergestelltes Stabgitter in der gewünschten Güte und Ausbildung hergestellt werden kann. Hierzu bedarf es entsprechender Durchmesser hinsichtlich der Querstäbe, damit eine entsprechende Verteilung des Gussmaterials während des Gießens gestattet ist. Die Längsstäbe können produktionsbedingt in ihrem Durchmesser kleiner als die Querstäbe ausgebildet werden. Produktionstechnisch dienen die die späteren Querstäbe bildenden Kanäle der Gussform mithin als Hauptgussrichtung, womit die Herstellungsrichtung in Richtung der Ausrichtung der Querstäbe liegt.

Die erfindungsgemäße Ausgestaltung sieht eine seitliche Stromabfuhr vor, nämlich zu dem seitlich des Stabgitters ausgebildeten Stromabnehmerstegs. Die Hauptstromabfuhrrichtung erstreckt sich mithin in Richtung der Querstäbe. Produktionsbedingt sind die Querstäbe in ihrem Durchmesser größer als die Längsstäbe ausgebildet, was die Stromabfuhr in Richtung auf den Stromabfuhrsteg begünstigt. Bei der erfindungsgemäßen Ausführungsform fallen mithin die Herstellrichtung für das Stabgitter und die Stromabnahmerichtung zusammen, was im Ergebnis einen vergleichmäßigteren Stromfluss über die gesamte negative Elektrode erbringt. Die Ausgestaltung nach dem Stand der Technik gestattet dies nicht, da hier die Herstellrichtung des Stabgitters und die Hauptstromabnahmerichtung um 90° verdreht zueinander ausgerichtet sind.

Die erfindungsgemäße Ausrichtung der negativen Platte gestattet es zudem, diese in einem kontinuierlichen Verfahren herzustellen. Dies ist bei vorbekannten Platten aufgrund der Ausbildung und Ausrichtung des Stromabnehmerstegs mit der daran angeordneten Stromabnehmerfahne nicht möglich. Es ergibt sich hier vielmehr ein mit Bezug auf die jeweilige Batteriegröße entsprechendes Rastermaß und die Platten sind in Entsprechung dieses Rastermaß diskontinuierlich herzustellen. Die erfindungsgemäße Ausgestaltung erlaubt eine kontinuierliche Endlosherstellung. Danach wird ein endloses Stabgitterband hergestellt, das in Entsprechung der späteren Batteriegröße zur Bildung einzelner Stabgitter abzulängen ist. Anschlusspolseitig sind zur Freistellung des als Stromabnehmerfahne dienenden Endabschnitts des Stromabnehmerstegs ein oder zwei benachbarte Gitterkreuze des Stabgitters beispielsweise durch Stanzen zu entfernen. Dabei können Ablängung und Gitterkreuzentfall in einem Arbeitsschritt durchgeführt werden. Die erfindungsgemäße Konstruktion erlaubt damit insgesamt hinsichtlich des Herstellungsverfahrens eine deutlich gestiegenere Produktivität.

Es ist gemäß einem weiteren Merkmal der Erfindung vorgesehen, dass die Querstäbe der negativen Elektrode und die Seelen der positiven Elektrode in ihrer jeweiligen Erstreckung in Längsrichtung gleichlang ausgebildet sind. Der schon vorbeschriebene Vorteil der stets gleichen Stromflusslängen wird so zusätzlich begünstigt.

Weitere Merkmale und Vorteile der Erfindung ergeben sich aus der nachfolgenden Beschreibung anhand der Figuren. Dabei zeigen
- Fig. 1: in explosionsartiger Schemadarstellung eine Batterie nach dem Stand der Technik;
- Fig. 2: in schematischer Perspektivdarstellung die Seelenanordnung einer positiven Elektrode einer erfindungsgemäßen Batterie;
- Fig. 3: in schematischer Perspektivdarstellung eine positive Elektrode einer erfindungsgemäßen Batterie;
- Fig. 4: in schematischer Seitenansicht eine positive Elektrode einer erfindungsgemäßen Batterie;
- Fig. 5: in schematischer Seitenansicht eine negative Elektrode einer erfindungsgemäßen Batterie und
- Fig. 6: in einer schematischen Seitenansicht eine positive und eine negative Elektrode einer erfindungsgemäßen Batterie.

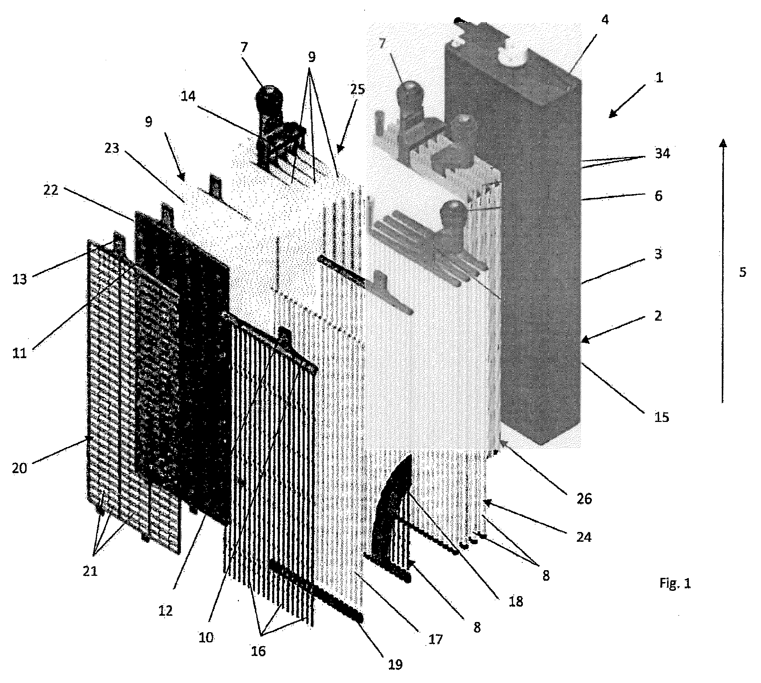

Fig. 1 lässt in explosionsartiger Darstellung perspektivisch eine Traktionsbatterie 1 nach dem Stand der Technik erkennen. Diese verfügt über ein Gehäuse 2, das einen Bottich 3 aufweist, der oberseitig offen ausgebildet und mittels eines Deckels 4 im endmontierten Zustand verschlossen ist. In Abhängigkeit der im Verwendungsfall gewünschten Batteriespannung können auch mehrere Batterien 1 zu einer gemeinsamen Batterieeinheit zusammengeschaltet sein. Die beispielhaft in Fig. 1 gezeigte Batterie betrifft eine 2V-Ausführungsform, die auch als Zelle bezeichnet werden kann. Für eine 12V- oder 24V-Ausführungsform sind entsprechend viele solcher Zellen miteinander zu verschalten.

In den Bottich 3 ist im endmontierten Zustand ein Gesamtplattenpaket 26 eingesetzt, das oberseitig Anschlusspole trägt, und zwar einen Plus-Pol 6 und einen Minus-Pol 7. Im endfertig montierten Zustand durchgreifen die Anschlusspole im Deckel 4 ausgebildete Öffnungen, so dass sie von außen verwenderseitig zugänglich sind.

Das Gesamtpaket 26 ist aus einem positiven Plattenpaket 24 und einem negativen Plattenpaket 25 gebildet, wobei sich die positiven Elektroden 8 und die negativen Elektroden 9 im endmontierten Zustand einander abwechseln.

Eine positive Elektrode 8 verfügt in Form eines Oberrahmens über einen quer zur Höhenrichtung 5 des Gehäuses 2 verlaufenden Stromabnehmersteg 10. Oberseitig des Stromabnehmerstegs 10 ist eine Stromabnehmerfahne 12 vorgesehen. Im endmontierten Zustand sind die Stromabnehmerfahnen 12 mehrerer positiver Elektroden 10 mittels einer gemeinschaftlichen Brücke 15 elektrisch miteinander gekoppelt und an den Plus-Pol 6 der

### Batterie 1 angeschlossen.

Auf der anschlusspolentfernten Seite des Stromabnehmerstegs 10 zweigen Seelen 18 ab, die sich in ihrer Längsausrichtung in Höhenrichtung 5 des Gehäuses 2 erstrecken. Im endmontierten Zustand sind die Seelen 16 von einer Rohrtasche 17 aufgenommen, die je Seele 16 eine Röhre bereitstellt. Der im endmontierten Zustand freie Volumenraum innerhalb einer jeden Röhre ist mit aktiver Masse 18 befüllt. Es ergibt sich so je Röhre der Rohrtasche 17 eine Anordnung, dergemäß die Seele 16 die zugehörige Röhre in Längsrichtung durchgreift, wobei der Ringraum zwischen jeweiliger Seele 16 und Innenwand der Röhre mit aktiver Masse befüllt ist.

Um ein unterseitiges Austreten von aktiver Masse 18 aus der Rohrtasche 17 zu verhindern, ist die Rohrtasche 17 unterseitig verschlossen ausgebildet, zu welchem Zweck eine Verschlussleiste 19 vorgesehen ist.

Die negative Elektrode 9 verfügt ebenfalls über einen Stromabnehmersteg 11, der als Oberteil eines Rahmens ausgebildet ist und quer zur Höhenrichtung 5 des Gehäuses 2 verläuft. Zur Anbindung an den Minus-Pol 7 der Batterie 1 dient je negativer Elektrode 9 eine am jeweiligen Stromabnehmersteg 11 oberseitig angeordnete Stromabnehmerfahne 13, wobei die Stromabnehmerfahnen 13 mehrerer negativer Elektroden 9 elektrisch mittels einer gemeinsamen Brücke 14 kontaktiert sind.

An den Stromabnehmersteg 11 schließt sich ein Stabgitter 20 an, das einzelne Gitterfelder 21 bereitstellt, die mit aktiver Masse 22 befüllt sind. Dabei verfügt das Stabgitter 20 über in Höhenrichtung 5 verlaufende Längsstäbe und über dazu querverlaufende Querstäbe, wobei der Durchmesser der Längsstäbe den Durchmesser der Querstäbe übersteigt.

Zwecks Kurzschlussvermeidung sind die positiven Elektroden 8 und die negativen Elektroden 9 elektrisch voneinander entkoppelt, zu welchem Zweck ein Separator zum Einsatz kommt. Im gezeigten Ausführungsbeispiel kommt als Separator ein geripptes Separatorblatt 34 zum Einsatz. Ferner ist je negativer Elektrode 9 eine Vliestasche 23 vorgesehen in die die jeweilige negative Elektrode 9 eingeschoben ist.

Die vorbeschriebene Traktionsbatterie 1 steht in unterschiedlich großen Bauformen zur Verfügung, wobei die Kapazität der Traktionsbatterie 1 mit zunehmender Größe steigt. Aufgrund einschlägiger Normen und Vorschriften steht als Dimensionierungsgröße für marktgerechte Traktionsbatterien 1 die Höhenrichtung 5 oder die Tiefenrichtung, nicht aber die Breitenrichtung zur Verfügung. In ihrer Kapazität unterschiedliche Traktionsbatterien 1 unterscheiden sich mithin vornehmlich in ihrer Erstreckung in Höhenrichtung 5. Damit sind Traktionsbatterien 1 unterschiedlicher Baugröße in ihrem Aufbau und in ihrer Ausstattung dem Grunde nach in gleicher Weise zueinander ausgebildet, nur die positiven Elektroden 8 beziehungsweise die negativen Elektroden 9 sind für die Aufnahme von mehr aktiver Masse 18 zwecks Kapazitätserhöhung in Folge einer größeren Bauhöhe länger ausgebildet, das heißt verfügen über eine größere Erstreckung in Höhenrichtung 5.

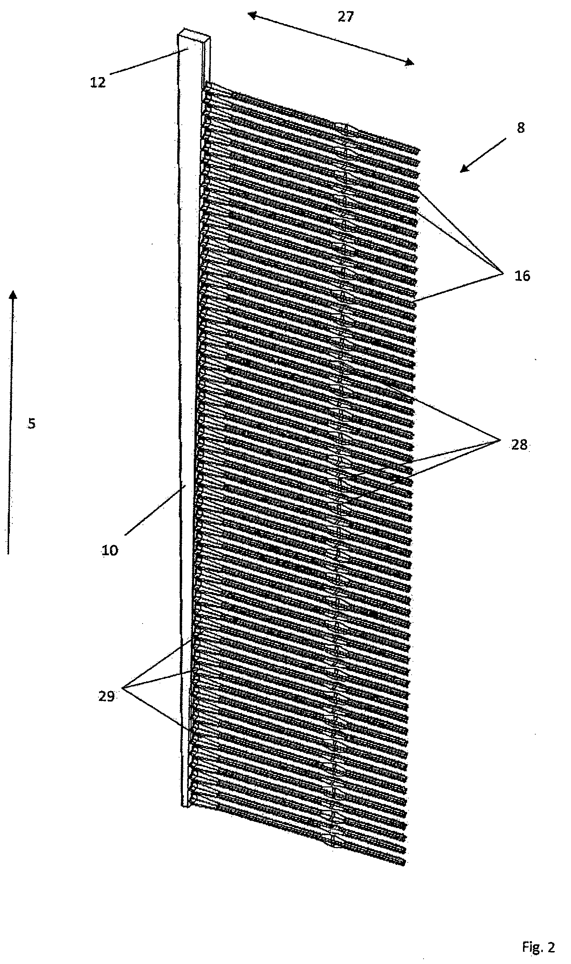

Die Ausgestaltung nach der Erfindung ergibt sich aus den weiteren Figuren 2 bis 6, wobei in diesen Figuren der Einfachheit halber nur die positiven Elektroden 8 beziehungsweise die negativen Elektroden 9 in unterschiedlichen Ansichten dargestellt sind. Alle anderen Batteriebestandteile, über die selbstverständlich auch die erfindungsgemäße Traktionsbatterie 1 verfügt, sind der besseren Übersicht wegen nicht dargestellt.

Fig. 2 zeigt in schematischer Perspektivdarstellung die Seelenanordnung einer erfindungsgemäßen positiven Elektrode 8. Wie sich aus der Darstellung ergibt, weist die positive Elektrode 8 einen Stromabnehmersteg 10 auf. Dieser verläuft im Unterschied zum Stand der Technik in Höhenrichtung 5 des Batteriegehäuses 2 und der anschlusspolseitige Endabschnitt des Stromabnehmerstegs 10 dient als Stromabnehmerfahne 12. In der gezeigten Ausführungsform ist der Stromabnehmersteg 10 zudem in Richtung auf sein den Anschlusspolen gegenüberliegendes Ende verjüngt zulaufend ausgebindet.

Die positive Elektrode 8 verfügt desweiteren über eine Mehrzahl von Seelen 16, die vom Stromabnehmersteg 10 abzweigen und die sich parallel zueinander erstrecken. Im Unterschied zum Stand der Technik nach Fig. 1 sind die Seelen 16 allerdings quer zur Höhenrichtung 5 ausgerichtet, das heißt ihre Längserstreckung 27 ist quer zur Höhenrichtung 5 des Gehäuses 2. Im gezeigten Ausführungsbeispiel sind die Seelen 16 orthogonal ausgebildet, die jeweilige Längsrichtung 27 steht also im 90°-Winkel zur Höhenrichtung 5 des Gehäuses 2.

Die Querausrichtung der Seelen 16 erbringt den Vorteil, dass die Länge der Seelen 16, das heißt ihre jeweilige Erstreckung in Längsrichtung 27 batteriebaugrößenunabhängig stets gleich groß ist. So ist im Falle einer größeren Baugröße zwecks Kapazitätssteigerung der sich in Höhenrichtung 5 erstreckende Stromabnehmersteg zu verlängern und entsprechend der Verlängerung die Anzahl der insgesamt vorzusehenden Seelen 16 zu erhöhen. Die jeweilige Länge der Seelen 16 bleibt aber stets gleich und verlängert sich im Unterschied zum Stand der Technik bei einer größeren Baugröße der Batterie 1 nicht.

Die erfindungsgemäße Ausgestaltung bringt eine Vielzahl von Vorteilen mit sich. Von besonderem Vorteil ist indes, dass der durch die Länge einer Seele 16 bestimmte Innenwiderstand einer Seele 16 baugrößenunabhängig gleich bleibt. Damit ist die erfindungsgemäße Traktionsbatterie auch in einer großen Baugröße hochstromgeeignet.

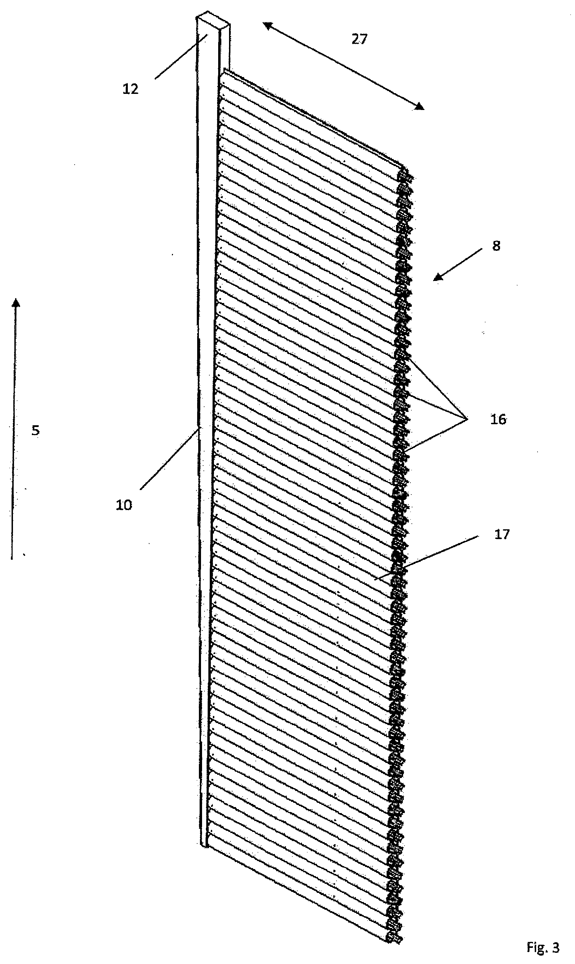

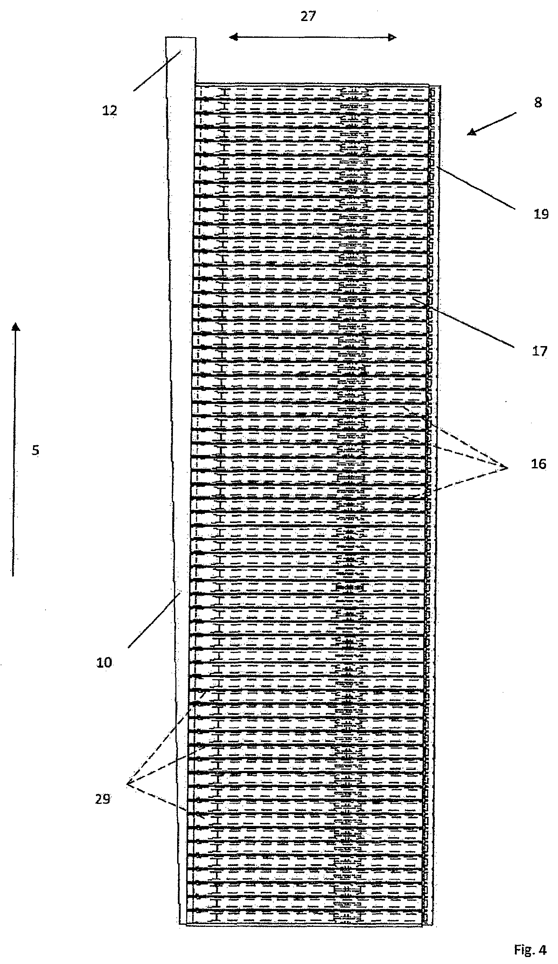

Fig. 3 zeig die positive Elektrode 8 mit einer auf die Seelen 16 aufgesetzten Rohrtasche 17. In an sich bekannter Weise ist der jeweils eine Seele 16 umgebende Ringraum der Rohrtasche 17 mit aktiver Masse 18 befüllt. Dies lässt insbesondere die Darstellung nach Fig. 4 erkennen, die zum Zwecke des Verschlusses der Rohrtasche 17 an ihrem Stromabnehmersteg entgegengesetzten Ende auch eine Verschlussleiste 19 zeigt.

Zur lagesicheren Anordnung der Rohrtasche 17 dienen an der Seele 16 angeordnete Abstandshalter 28 sowie Anschlussabschnitt 29, die vorzugsweise in Richtung auf den Stromabnehmersteg 10 konisch zulaufend ausgebildet sind.

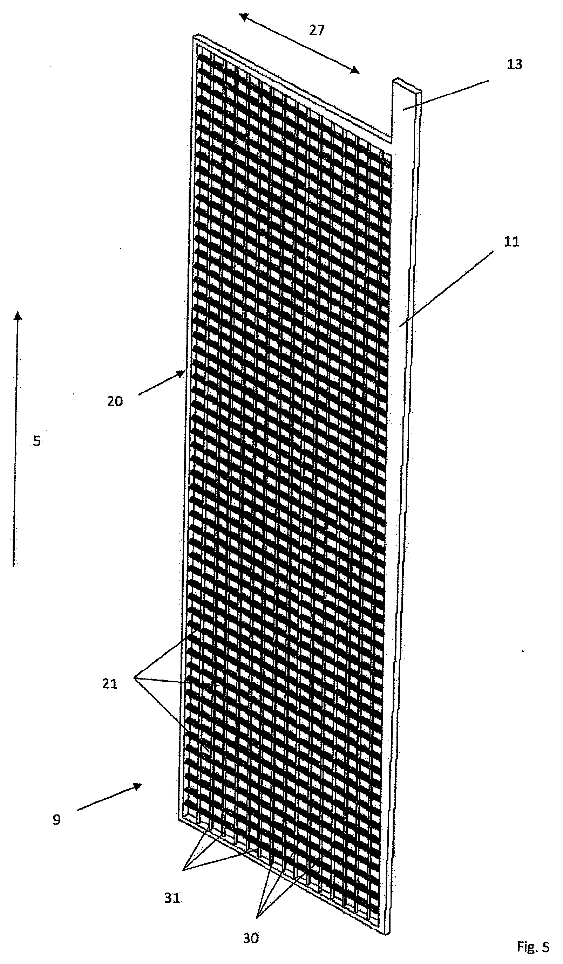

Die Ausgestaltung einer negativen Elektrode 9 ergibt sich aus der schematischen Seitenansicht nach Fig. 5. Zu erkennen ist, dass die negative Elektrode 9 in an sich bekannter Weise über einen Stromabnehmersteg 11 verfügt. Dieser ist im Unterschied zum Stand der Technik allerdings nicht quer zur Höhenrichtung 5 sondern längs hierzu verlaufend ausgebildet, erstreckt sich also in Höhenrichtung 5. Der Stromabnehmersteg 11 geht in eine anschlusspolseitig vorgesehene Stromabnehmerfahne 13 direkt über.

Die negative Elektrode 9 verfügt desweiteren über ein Stabgitter 21. Dieses ist am Stromabnehmersteg 11 angeordnet, wobei sich im Unterschied zum Stand der Technik mit Bezug auf die Höhenrichtung 5 nicht eine Übereinanderanordnung, sondern eine seitliche Anordnung ergibt. Im gezeigten Ausführungsbeispiel erstreckt sich das Stabgitter 20 ausgehend vom Stromabnehmersteg 11 nach links.

Das Stabgitter 20 weist Gitterfelder 21 auf, die im endmontierten Zustand mit aktiver Masse 22 befüllt sind. Dabei wird ein jedes Gitterfeld 21 durch Querstäbe 30 einerseits und Längsstäbe 31 andererseits begrenzt. Dabei sind die Querstäbe 30 in ihrem Durchmesser größer ausgebildet als die Längsstäbe 31. Es ergibt sich insofern im Unterschied zum Stand der Technik eine Umkehr, denn im Unterschied zum Stand der Technik sind nicht die Längsstäbe 31 sondern die Querstäbe 30 mit größerem Durchmesser ausgebildet. Dies erbringt den Vorteil, dass die Herstellrichtung der beispielsweise im Fallgussverfahren hergestellten negativen Elektrode 9 und die spätere Stromabflussrichtung zur Seite, nämlich mit Bezug auf die Zeichnungsebene nach Fig. 5 nach rechts in Richtung auf den seitlich ausgebildeten Stromabnehmersteg 11 zusammenfallen. Die herstellungsbedingt materialstärkeren Querstäbe 30 liegen also in Stromflussrichtung, womit ein insgesamt vergleichmäßigter Betrieb der negativen Elektrode 9 gestattet ist.

Produktionstechnisch ist die erfindungsgemäße Ausgestaltung insoweit auch von Vorteil, als das nunmehr eine kontinuierliche Endlosherstellung der negativen Elektrode 9 gestattet ist. So kann ein in Höhenrichtung 5 endlos ausgebildetes Gitterband hergestellt werden, das lediglich auf Länge abzulängen und zur Freilassung der Stromabnehmerfähne 13 um ein gegebenenfalls zwei ansonsten der Stromabnehmerfahne 13 nebenbenachbarte Gitterkreuze des Stabgitters 20 zu befreien ist, was in einfacher Weise durch Ausstanzen erfolgen kann.

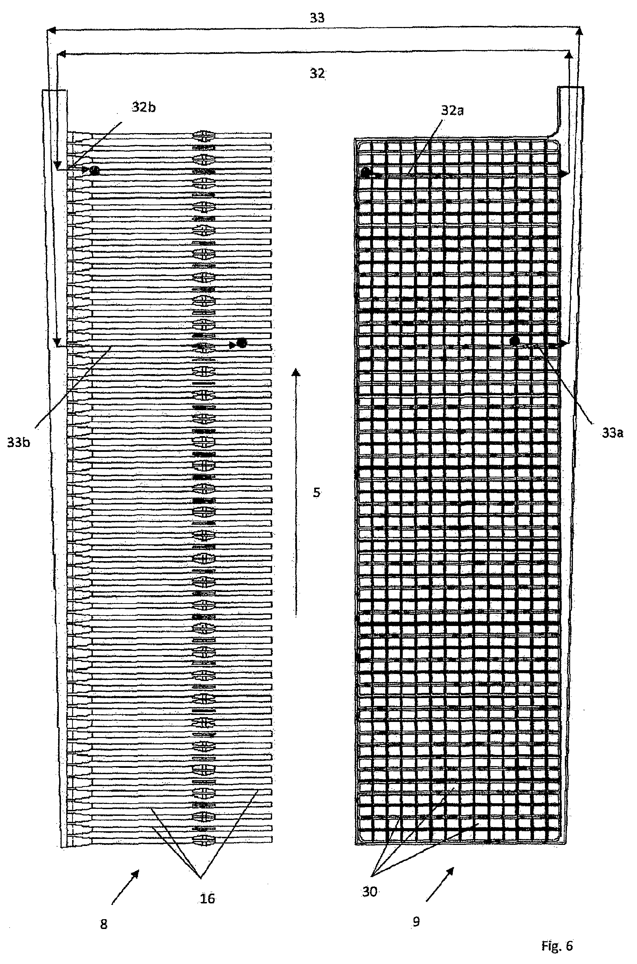

In Kombination erbringen die positive Elektrode 8 und die negative Elektrode 9 zudem den Vorteil eines mit Bezug auf die Seelen 16 und das Stabgitter 20 immer gleichen Stromwegs 32 und 33, wie dies beispielhaft in Fig. 6 dargestellt ist.

Fig. 6 zeigt eine positive Elektrode 8 und eine negative Elektrode 9, und zwar der grafischen Darstellbarkeit wegen nebeneinander. Im endmontierten Zustand sind die Elektroden 8 und 9 hintereinander angeordnet. Der Stromfluss erfolgt bei Zwischenschaltung eines Verbrauchers zwischen die Anschlusspole von der negativen Elektrode 9 zur zugehörigen positiven Elektrode 8, was durch die eingezeichneten Stromwege 32 und 33 schematisch dargestellt ist. Wie dabei die beiden exemplarisch eingezeichneten Stromwege 32 und 33 erkennen lassen, ist der Stromweg hinsichtlich der Seelen 16 einerseits und des Stabgitters 20 andererseits aufgrund der erfindungsgemäßen Ausgestaltung der Elektroden 8 und 9 stets gleich lang. Ist der vom Strom zurückzulegende Weg hinsichtlich des Stabgitters 20 der negativen Elektrode 9 vergleichsweise lang, so ergibt sich ein vergleichsweise kurzer Weg hinsichtlich der Seelen 16 der zugehörigen positiven Elektrode 8, wie dies die Abschnitte 32a und 32b des Stromweges 32 zeigen. Bei nur vergleichsweise kurzem Stromweg hinsichtlich des Stabgitters 20 der negativen Elektrode 9 ergibt sich ein vergleichsweise langer Stromweg hinsichtlich der Seelen 16 der zugehörigen positiven Elektrode 8, wie dies beispielhaft die Abschnitte 33a und 33b des Stromwegs 33 zeigen. Entscheidend ist, dass die jeweiligen Abschnitte der beiden Stromwege 32 und 33 im Wesentlichen gleich lang sind, sich mithin eine gleichmäßige Be- und Entstromung der Batterie 1 bei einer Be- beziehungsweise Entladung ergibt. Bei einer Batterie nach dem Stand der Technik ergeben sich unterschiedlich lange Stromwege, da ein vergleichsweise kurzer Stromweg auf der negativen Elektrode 9 zu einem ebenfalls vergleichsweise kurzen Stromweg auf der positiven Elektrode 8 führt. Ein vergleichsweise langer Stromweg auf der negativen Elektrode 9 führt indes auch zu einem vergleichsweise langen Stromweg auf der positiven Elektrode 8. Die erfindungsgemäße Querausrichtung schafft hier in der schon vorbeschriebenen Weise Abhilfe.

Die vorbeschriebene Querausrichtung erbringt insbesondere hinsichtlich der positiven Elektrode 8 einen weiteren Vorteil. So führt im bestimmungsgemäßen Betrieb der Stromweg jeweils über die Seelen 16 in den damit verbundenen Stromabnehmersteg 10. Im Übergangsbereich einer jeden Seele 16 zum Stromabnehmersteg 10 kommt es in Abhängigkeit der Seelenlänge zu einer erhöhten Stromdichte. Dabei ist die Stromdichte im Übergangsbereich zwischen jeweiliger Seele 16 und Stromabnehmersteg 10 umso höher, je länger die jeweiligen Seelen 16 sind. Dabei gilt es hohe Stromdichten dem Grunde nach zu vermeiden, da dies zu einer verstärkten Wärmeentwicklung und einer höheren Korrosionsanfälligkeit führt. Im Ergebnis ergibt sich bei höher anliegenden Stromdichten eine verkürzte Lebensdauer. Da die Seelen 16 der erfindungsgemäßen Batterie 1 in ihrer Längserstreckung auch bei größeren Batteriebauformen kleiner als bei den Seelen 16 nach dem Stand der Technik ausfällt, steigt bei gleicher Batteriekapazität hinsichtlich der erfindungsgemäßen Batterie die zu erwartende Lebensdauer im Vergleich zu einer Batterie in der Bauform nach dem Stand der Technik.

### Bezugszeichenliste

- 1: Traktionsbatterie
- 2: Gehäuse
- 3: Bottich
- 4: Deckel
- 5: Höhenrichtung Gehäuse
- 6: Plus-Pol
- 7: Minus-Pol
- 8: positive Elektrode
- 9: negative Elektrode
- 10: Stromabnehmersteg positive Elektrode
- 11: Stromabnehmersteg negative Elektrode
- 12: Stromabnehmerfahne positive Elektrode
- 13: Stromabnehmerfahne negative Elektrode
- 14: Brücke
- 15: Brücke
- 16: Seele
- 17: Rohrtasche
- 18: aktive Masse
- 19: Verschlussleiste
- 20: Stabgitter
- 21: Gitterfeld
- 22: aktive Masse
- 23: Vliestasche
- 24: positives Plattenpaket
- 25: negatives Plattenpaket
- 26: Gesamtplattenpaket
- 27: Längsrichtung Seele/Querstab
- 28: Abstandshalter
- 29: Anschlussabschnitt
- 30: Querstab
- 31: Längsstab
- 32: Stromweg
- 33: Stromweg
- 34: Separatorbiatt

## Patentansprüche

1. Batterie, insbesondere Traktionsbatterie, mit einem oberseitig Anschlusspole (6, 7) bereitstellenden Batteriegehäuse (2), in dem mit den Anschlusspolen (6, 7) verbundene negative und positive Elektroden (8, 9) einander abwechselnd angeordnet sind, wobei die positiven Elektroden (8) als Rohrplatten ausgebildet sind und jeweils einen Stromabnehmersteg (10) sowie eine Mehrzahl von sich von dem Stromabnehmersteg (10) parallel zueinander erstreckenden Seelen (16) aufweisen, und wobei die negativen Elektroden (9) als Gitterplatten ausgebildet sind und jeweils einen in eine Stromabnehmerfahne (13) übergehenden Stromabnehmersteg (11) sowie ein daran angeordnetes Stabgitter (20) aufweisen, das mit aktiver Masse befüllte Gitterfelder (21) bereitstellt
**dadurch gekennzeichnet,**
**dass** die Seelen (16) der positiven Elektroden (8) quer, vorzugsweise orthogonal zur Höhenrichtung (5) des Batteriegehäuses (2) verlaufend ausgerichtet sind und dass der Stromabnehmersteg (11) der negativen Elektroden (9) in Höhenrichtung (5) des Batteriegehäuses (2) verlaufend ausgerichtet ist.

2. Batterie nach Anspruch 1, **dadurch gekennzeichnet, dass** die Stromabnehmerstege (10) in Höhenrichtung (5) des Batteriegehäuses (2) ausgerichtet sind.

3. Batterie nach Anspruch 1 oder 2, **dadurch gekennzeichnet, dass** die Stromabnehmerstege (10) jeweils in Richtung auf ihr den Anschlusspolen (6, 7) gegenüberliegendes Ende verjüngt zulaufend ausgebildet sind.

4. Batterie nach einem der vorhergehenden Ansprüche, **dadurch gekennzeichnet, dass** der anschlusspolseitige Endabschnitt der Stromabnehmerstege (10) jeweils als Stromabnehmerfahne (12) dient.

5. Batterie nach einem der vorhergehenden Ansprüche, **dadurch gekennzeichnet, dass** die Seelen (16) einen sternförmigen Querschnitt aufweisen.

6. Batterie nach Anspruch 1, **dadurch gekennzeichnet, dass** der Stromabnehmersteg (11) mit dem daran angeordneten Stabgitter (20) als Fallgußteil hergestellt ist.

7. Batterie nach Anspruch 6, **dadurch gekennzeichnet, dass** das Stabgitter (20) Quer- und Längsstäbe (30, 31) aufweist, wobei die Querstäbe (30) quer zur Höhenrichtung (5) des Stromabnehmerstegs (11) verlaufen und einen den Durchmesser der Längsstäbe (31) übersteigenden Durchmesser besitzen.

8. Batterie nach Anspruch 7, **dadurch gekennzeichnet, dass** die Querstäbe (30) der negativen Elektroden (9) und die Seelen (16) der positiven Elektroden (8) in ihrer jeweiligen Erstreckung in Längsrichtung (27) gleich lang ausgebildet sind.

## Claims

1. A battery, in particular a traction battery, comprising a battery casing (2) which provides terminals (6, 7) on the top side, in which battery casing negative and positive electrodes (8, 9) which are connected to the terminals (6, 7) are arranged in an alternating manner, wherein the positive electrodes (8) are designed as tube plates and respectively comprise a current collecting strip (10) as well as a plurality of cores (16) extending in parallel to each other from the current collecting strip (10), and wherein the negative electrodes (9) are designed as grid plates and respectively comprise a current collecting strip (11), which merges into a current collecting lug (13), as well as a bar grate (20) arranged thereon, which provides grid fields (21) filled with active mass, **characterized in**
**that** the cores (16) of the positive electrodes (8) are oriented such that they extend transversely, preferably in an orthogonal manner with respect to the direction of height (5) of the battery casing (2) and that the current collecting strip (11) of the negative electrodes (9) is oriented such that it extends into the direction of height (5) of the battery casing (2).

2. A battery according to claim 1, **characterized in that** the current collecting strips (10) are oriented into the direction of height (5) of the battery casing (2).

3. A battery according to claim 1 or 2, **characterized in that** the current collecting strips (10) are respectively tapering into the direction of their end opposite the terminals (6, 7).

4. A battery according to one of the preceding claims, **characterized in that** the end portion on the side of the terminals of the current collecting strips (10) respectively serves as current collecting lug (12).

5. A battery according to one of the preceding claims, **characterized in that** the cores (16) comprise a star-shaped cross section.

6. A battery according to claim 1, **characterized in that** the current collecting strip (11) with the bar grate (20) arranged thereon is produced as a casting.

7. A battery according to claim 6, **characterized in that** the bar grate (20) comprises transverse and longitudinal bars (30, 31), wherein the transverse bars (30) extend transversely with respect to the direction of height (5) of the current collecting strip (11) and comprise a diameter, which is greater than the diameter of the longitudinal bars (31).

8. A battery according to claim 7, **characterized in that** the transverse bars (30) of the negative electrodes (9) and the cores (16) of the positive electrodes (8) comprise the same length of their respective extension in the longitudinal direction (27).

## Revendications

1. Batterie, notamment batterie de traction, comprenant un boîtier de batterie (2) fournissant des pôles de connexion (6, 7) sur la surface supérieure, dans lequel boîtier de batterie sont disposées des électrodes négatives et positives (8, 9) de manière alternante, lesquelles sont reliées aux pôles de connexion (6, 7), les électrodes positives (8) étant configurées comme des plaques à tubes et comprenant chacune une bande collectrice de courant (10) ainsi qu'une pluralité de noyaux (16) qui s'étendent parallèlement les uns aux autres à partir de la bande collectrice de courant (10), et les électrodes négatives (9) étant configurées comme des plaques à grille et comprenant chacune une bande collectrice de courant (11), qui se prolonge dans une queue collectrice de courant (13), ainsi qu'un grillage à barreaux (20) disposé sur celle-ci, lequel grillage à barreaux fournit des champs à grille (21) remplis de masse active,
**caractérisée en ce**
**que** les noyaux (16) des électrodes positives (8) sont orientés de sorte qu'ils s'étendent transversalement, de préférence orthogonalement par rapport à la direction de hauteur (5) du boîtier de batterie (2) et que la bande collectrice de courant (11) des électrodes négatives (9) est orientée de sorte qu'elle s'étend dans la direction de hauteur (5) du boîtier de batterie (2).

2. Batterie selon la revendication 1, **caractérisée en ce que** les bandes collectrices de courant (10) sont orientées dans la direction de hauteur (5) du boîtier de batterie (2).

3. Batterie selon la revendication 1 ou la revendication 2, **caractérisée en ce que** les bandes collectrices de courant (10) sont chacune configurées de sorte qu'elles s'effilent dans la direction de leur extrémité opposée aux pôles de connexion (6, 7).

4. Batterie selon l'une des revendications précédentes, **caractérisée en ce que** les parties d'extrémité des bandes collectrices de courant (10), lesquelles se trouvent du côté des pôles de connexion, servent chacune comme queue collectrice de courant (12).

5. Batterie selon l'une des revendications précédentes, **caractérisée en ce que** les noyaux (16) comprennent une section transversale en forme d'étoile.

6. Batterie selon la revendication 1, **caractérisée en ce que** la bande collectrice de courant (11) avec le grillage à barreaux (20) disposé sur celle-ci est fabriquée comme pièce coulée.

7. Batterie selon la revendication 6, **caractérisée en ce que** le grillage à barreaux (20) comprend des barreaux transversaux et longitudinaux (30, 31), les barreaux transversaux (30) s'étendant transversalement par rapport à la direction de hauteur (5) de la bande collectrice de courant (11) et comprenant un diamètre, qui est plus grand que le diamètre des barreaux longitudinaux (31).

8. Batterie selon la revendication 7, **caractérisée en ce que** les barreaux transversaux (30) des électrodes négatives (9) et les noyaux (16) des électrodes positives (9) comprennent la même longueur de leur extension respective dans la direction longitudinale (27).
